# EUROPÄISCHE PATENTSCHRIFT

(11) **EP 0 963 229 B1**
(45) Veröffentlichungstag und Bekanntmachung des Hinweises auf die Patenterteilung: **24.07.2002**
(21) Anmeldenummer: 98908062.7
(22) Anmeldetag: 05.02.1998
(51) Int. Cl.: B01D 19/00

(54) **VERFAHREN ZUR ENTGASUNG VON FLÜSSIGKEITEN**
PROCESS FOR DEGASSING LIQUIDS
PROCEDE POUR DEGAZER DES LIQUIDES

(30) Priorität: 06.02.1997 DE 19704298
(43) Veröffentlichungstag der Anmeldung: 15.12.1999
(73) Patentinhaber: Pannenborg, Jens, 53797 Lohmar (DE)
(72) Erfinder: Pannenborg, Jens, 53797 Lohmar (DE)
(74) Vertreter: Leineweber, Jürgen, Dipl.-Phys.
(86) Internationale Anmeldenummer: EP9800631
(87) Internationale Veröffentlichungsnummer: WO9834709

(56) Entgegenhaltungen:
- EP-A- 0 377 146
- DD-A- 224 223
- DE-C- 583 763
- US-A- 4 407 665
- US-A- 5 203 890

## Beschreibung

Die Erfindung betrifft ein Verfahren zur Entgasung von Flüssigkeiten mit den Merkmalen des Oberbegriffs des Patentanspruchs 1. Außerdem bezieht sich die Erfindung auf eine Apparatur zur Durchführung dieses Verfahrens mit den Merkmalen des Oberbegriffs des Patentanspruchs 5.

### Stand der Technik

Beim Entfernen von Gasen aus Flüssigkeiten, in der Hauptsache aus Wasser, wird generell untrschieden zwischen
1. dem Entfernen (Entlüften) von überschüssigen Gasen, die das spezifische Lösungsgleichgewicht überschreiten,
2. dem Austreiben (Entgasen) von chemisch gelösten Gasen.

Zu 1.) In Wasser im Überschuß enthaltene Gase bereiten in Kreisläufen (Heizungen, Kühlungen, Temperierungen) generell erhebliche Probleme. Als feinste Luftblasen erzeugen sie Strömungsgeräusche, Kavitation und Erosion in den Werkstoffen und vermindern den gleichmäßigen Wärmetransport im Rohrnetz und an für den Wärmeaustausch vorgesehenen Oberflächen, wie Kühlern und Heizflächen.
Zum Vermeiden dieser Probleme werden Entlüftungsgeräte hergestellt, die generell mit einem in einer Kammer angebrachten und mit einem mit dem Schwimmer verbundenen Absperrventil arbeiten. Ist die Kammer gefüllt, schließt der aufgestiegene Schwimmer das Ventil. Umgekehrt öffnet der Schwimmer das Ventil, wenn in die Kammer Luft eintritt. Häufig sind solchen Entlüftervorrichtungen noch Luftsammeltöpfe, Zyclontöpfe oder Gefäße mit Schwerkörpern, die bewirken sollen, daß sich feinste Luftblasen zu größeren vereinen, um dann in der Kammer des Entlüfters aufzusteigen.

Zu 2.) Wenn in Wasser ein größeres Gasvolumen enthalten ist als zur chemischen Sättigung erforderlich, stellt diese Menge eine Nachschubreserve zur Wiederherstellung der natürlichen Sättigungskonzentration dar, die z.B. durch Reaktion eines Gases mit den Werkstoffen in der Lösung verloren geht.
Um den Gasüberschuß und auch die sich in der Lösung befindlichen Gase auszutreiben, werden thermische Entgasungsapparate hergestellt, bei denen einerseits durch Erhöhen der Temperatur die Gaslöslichkeit herabgesetzt wird und andererseits der Austreibungseffekt dadurch verstärkt wird, daß durch das zu entgasende Wasser Dampf gedrückt wird, wobei die sich bildenden Dampfblasen die sich im Wasser befindlichen Gasteilchen mitreißen und nach außen an die Atmosphäre befördern.
Andere Apparaturen erzeugen über dem Flüssigkeitsspiegel einen Unterdruck, wonach die Gase ebenfalls an die Oberfläche entweichen.

### Nachteile am Stand der Technik

zu 1.) Entlüftungsgeräte können nach dem Gesetz von Henry nur die Gasmengen entfernen, die größer sind, als es die Faktoren Temperatur, Druck und Mediumseigenschaften an Löslichkeit zulassen. In einem Kreislaufsystem herrschen zwar grundsätzlich immer zwei unterschiedliche Druckbereiche zwischen Saug- und Druckbereich einer Zirkulationspumpe, so daß theoretisch, an der Saugseite einer Pumpe angeordnet ein Entlüfter Gas aus dem System befördern sollte. Der Praxis sind dabei aber enge Grenzen gesetzt, denn der Entlüfter muß unter einem Mindestdruck stehen damit seine Schwimmerkammer gefüllt bleibt. Anderenfalls fällt der Schwimmer und öffnet das Entlüftungsventil, so daß über den Entlüfter Luft angesaugt werden kann (der Entlüfter wird zum Belüfter).
Wenn aber ein Mindestdruck auf der Niederdruckseite erforderlich ist, kann die Luft auch nur unvollständig entfernt werden. Ein weiterer Nachteil dieser Art von Entlüftung ist, daß die Mikroblasen aufgrund der hohen Fließgeschwindikeit des Wassers, wenn überhaupt, nur in geringer Menge in die Schwimmerkammer des Entlüfters gelangen können.

zu 2.) Nach dem von Dalton erweiterten Henry'schen Gasgesetz bestimmen der auf eine Lösung wirkende Partialdruck, die Temperatur und die Art des Mediums die Löslichkeit von Gasen. Mit der bekannten Technik der thermischen Entgasung können diesbezüglich allerbeste Ergebnisse erzielt werden. Ein markanter Nachteil an dieser Technik ist aber, daß dafür große und aufwendige Apparaturen erforderlich sind: Ein Dampferzeuger zur Herstellung des Austreibedampfes und ein Sammelbehälter mit Entgaservorrichtung enthaltend große Verteilerflächen, auf denen das Wasser dem Dampf ausgesetzt werden kann. Dazu gehören eine umfangreiche Verrohrung, Regelorgane, Steuerung und die Sicherheitstechnik des Dampfbetriebs. Bei Dampferzeugungsanlagen sind solche thermischen Entgaseranlagen ein fester Bestandteil.
In geschlossenen Kühlwasserkreisen, Heizungen oder Kaltwasserkreisläufen sind sie weder wirtschaftlich noch praktisch einsetzbar, denn das entgaste Wasser müßte einmal erhitzt und danach wieder auf die Kreislauftemperatur abgekühlt werden.

Ähnlich wäre das Problem bei sogenannten Schnelldampferzeugern, in denen eine relativ geringe System-Wassermenge vorhanden ist und für die eine thermische Entgasungsanlage zu groß wäre.

Zum Stand der Technik gehört auch noch der Inhalt der US-Patentschriften 44 07 665 und 52 03 890. Sie offenbaren jeweils ein Verfahren zur Entgasung von Flüssigkeiten nach dem Oberbegriff des Patentanspruchs 1. In Bezug auf die Erzeugung des für die Entgasung von Flüssigkeiten notwendigen Unterdrucks erfordern sie jedoch aufwendige Maßnahmen (Fördermaßnahmen, Bauhöhe).

### Aufgabe

Erforderlich ist ein preiswertes, ambulant oder stationär einsetzbares Gerät, mit dem sowohl Gasüberschuß, als auch die chemisch gelösten Gase aus einer Flüssigkeit (z.B. Wasser) entfernt werden können. Die Temperatur der zu entgasenden Flüssigkeit soll nicht erhöht werden. Das Gerät sollte einfach bedienbar sein und für den Betrieb wenig Energie benötigen.

### Lösung

Die Aufgabe wird erfindungsgemäß durch die kennzeichnenden Maßnahmen der Patentansprüche gelöst. Durch die Entnahme eines Teils der Flüssigkeit aus dem Behälter und deren Transport in einen Speicherbehälter wird der Gesamtdruck (und damit die Partialdrücke auf alle Gase) so weit abgesenkt, daß der Siedepunkt der Flüssigkeit überschritten wird. Die Flüssigkeit kocht auf. Das Lösungsgleichgewicht der gelösten Gase verschiebt sich nach links und in der Folge werden alle überschüssigen Gase mit den Dampfblasen ausgetrieben. Die Temperatur der Flüssigkeit wird dabei nicht erhöht.

### Beschreibung

Die Erfindung betrifft ein Verfahren zur Entgasung von Flüssigkeiten im Unterdruck, wobei die dazugehörige Apparatur entweder parallel zu einem Kreislaufsystem geschaltet wird oder im Chargenbetrieb aus einem ersten Behälter mit gashaltiger Flüssigkeit eine bestimmte Menge entnimmt, sie entgast und in einen zweiten geschlossenen Behälter überführt.

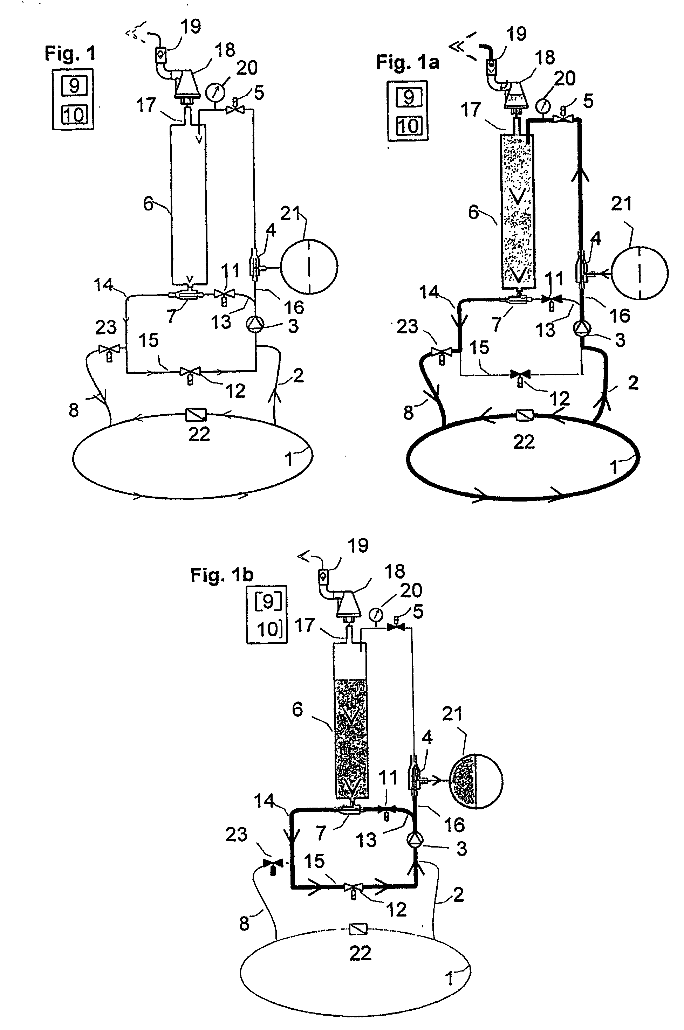

- Fig.1: zeigt eine solche Entgasungsapparatur. Aus einem Kreislauf(1) wird über die Strecke(2) mittels der Pumpe(3) Flüssigkeit entnommen, über die Strahlpumpe(4) und das automatische Ventil(5) durch den Behälter(6) gepumpt und von dort über die Strahlpumpe(7) und die Strecken(14) (8) und das automatische Ventil(23) zurück in den Kreislauf(1) befördert. Die automatischen Ventile(11) und (12) sind geschlossen. Es entsteht eine Umwälzung im Verlaufe derer der Behälter(6) mit gashaltigem Kreislaufwasser durchspült wird. Die Strahlpumpe(4) entleert den Membrandruckspeicher(21) vollständig und führt die dort gespeicherte Flüssigkeit in den Zirkulationskreis zurück. Die Umwälzzeit ist über eine Zeituhr(9) beliebig lang einstellbar.
Nach Ende der Umwälzzeit startet die Zeituhr(10) die Evakuierzeit. Dabei werden die automatischen Ventile (11) und (12) geöffnet und die automatischen Ventile(5), (23) geschlossen. Die Flüssigkeit wird jetzt von der Pumpe(3) über die Strecke(13) durch das automatische Ventil(11) und durch die Strahlpumpe(7), weiter über die Strecken(14) und (15) durch das automatische Ventil(12) im Kreis gepumpt. Dabei entsteht in der Strahlpumpe(7) eine kräftige Strömung, so daß an der Saugseite der Strahlpumpe(7) ein sehr starker Unterdruck entsteht. Auf diese Weise wird aus dem Behälter(6) die Flüssigkeit abgesaugt und mit dem Zirkulationsstrom über die Strecken(14), (15), (13) in die Teilstrecke(16) und dann durch die Strahlpumpe(4) in den Membranspeicher(21) gepreßt. Die Größe des Membranspeichers (21) und sein Gasvordruck werden nach der zu verdrängenden Flüssigkeitsmenge=Evakuiermenge berechnet und festgelegt. In dem Behälter(6) beginnt, je nach Einstellung des Unterdrucks und der Flüssigkeitstemperatur die Flüssigkeit spontan zu sieden. Die ausgetriebenen Gase steigen in den oberen Rohrstutzen(17) des Behälters(6) und weiter in die Schwimmerkammer des Entlüfters(18). Sie können zu diesem Zeitpunkt noch nicht über das Rückschlagventil(19) an die Atmosphäre entweichen, weil in dem Behälter(6) noch Unterdruck besteht.
Nach Ablauf der auf der Zeituhr(10) eingestellten Evakuierzeit läuft wiederum auf der Zeituhr(9) die Umwälzzeit an. Die während der Umwälzzeit ablaufenden Funktionen wurden oben bereits beschrieben. Bei der Umwälzung wird der Behälter(6) wieder vollständig gefüllt und unter Systemdruck gestellt. Dabei kondensieren alle Dampfblasen und im Rohrstutzen(17), sowie im Entlüfter(18) sammeln sich die ausgetriebenen Gase. Der Flüssigkeitsstand steigt bis in den Entlüfter(18) und preßt die Gase durch den Entlüfter(18) und das Rückschlagventil(19) nach draußen. Das Manometer(20) besitzt zwei Funktionen. Es zeigt sowohl den Überdruck, als auch den Unterdruck während der Arbeitszyklen Umwälzung und Evakuieren an.
- Fig. 1a: zeigt die Fließwege in der Entgasungsapparatur im Schaltzustand der Umwälzung, d.h. Beschicken der Apparatur mit gashaltigem Kreislaufwasser. Während der Umwälzung verhindert das Rückschlagventil(22) einen Kurzschluß zwischen dem Wassereintritt und dem Wasseraustritt des Haupt-Kreislaufs.
- Fig. 1b: zeigt die Fließwege in der Entgasungsapparatur im Schaltzustand der Evakuierung d.h. des Entgasens der im Behälter(6) vorhandenen Flüssigkeit.

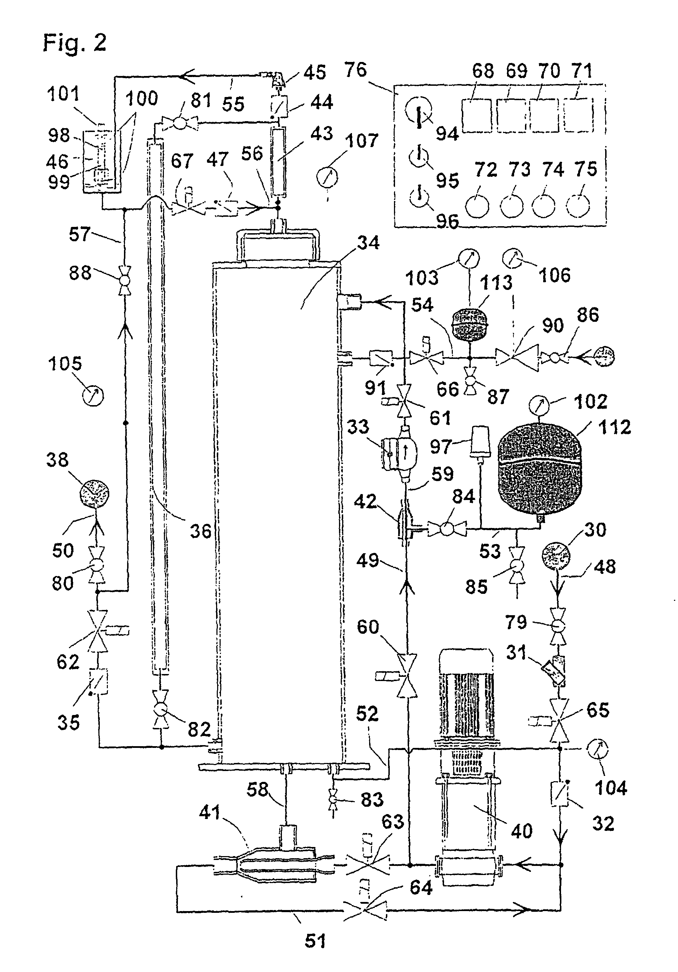

- Fig. 2: zeigt eine mit den Figuren 1,1a,1b funktionsgleiche Apparatur, jedoch zusätzlich ausgerüstet mit einer Vorrichtung für das Sammeln und Rückführen von Kondensat, sowie mit einer zusätzlichen Vorrichtung zum Nachsetzen des beim Entgasen enstandenen Volumensverlusts durch eine gleiche Menge Wasser.

### Beschreibung:

Grundstellung der Ventile bei ausgeschalteter Anlage vor der Inbetriebnahme:
Handventile 81, 82, 84, 86, geöffnet
Handventile 79, 80, 83, 85, 87, 88, geschlossen Automatische Ventile 60, 61, 62, 63, 64, 65, 66, 67 geschlossen.

Anlage für den Betrieb vorbereiten:

Die Anlage wird über die Nachsatzstrecke 54 befüllt. Dafür wird der Schalter 95 auf "aus", und die Schalter 94 und 96 auf "ein" geschaltet. Wenn Schalter 96 auf "ein" geschaltet ist, öffnet das aut. Ventil 66 und das Nachsatzwasser kann in dem Maße in die Anlage fließen, wie das Druckmindererventil 90 geöffnet wird.
Die Anlage wird nun über die Nachsatzstrecke 54 gefüllt. Die Luft entweicht über die Auspuffstrecke 55. Der Füllvorgang ist abgeschlossen, wenn über die Rohrstrecke keine Luft mehr entweicht und die Manometer 104, 106, 105 und 107 den gleichen Druck anzeigen.
Beim Befüllen wird das Druckmindererventil 90 gegen Ende der Befüllzeit auf den am Eintrittspunkt 30 herrschenden Systemdruck voreingestellt. Danach werden die Handventile 79 und 80 geöffnet. Dadurch stellt sich innerhalb der Entgaseranlage und des zu entgasenden Wassersystems ein gleicher Druck ein.
Durch Verstellen des Nachdrucks am Druckmindererventil 90 kann der endgültige Systemdruck während der Entgasung korrigiert werden.

Die Vordrücke der Membran-Ausdehnungsgefäße (MAG) 112 und 113 werden bei eingeschalteter Anlage (Hauptschalter 94 auf "ein") und eingeschalteter Pumpe (Schalter 95 auf "ein") auf den am Manometer 107 während der Umpumpzeit (Timer 68) herrschenden Druck eingestellt.

Zur Einstellung des Vordrucks in den MAG werden die Handventile 86 und 84 geschlossen, sodann die Handventile 85 und 87 geöffnet, bis die MAG wasserleer sind. Danach werden die Ventile wieder geschlossen und der Gasvordruck in den MAG mittels Stickstoffgas auf die vorher abgelesene Anzeige des Manometers 107 eingestellt. Die Anlage ist jetzt startbereit, die Vakuumentgasung kann beginnen:

Timerzeit1= Timer 68: Umpumpen, Wasserinhalt austauschen Mit Schalter 95 wird die Pumpe 40 eingeschaltet. Danach wird der Programmablauf durch kurzes Ein-Ausschalten von Schalter 94 zurückgesetzt.

Eine Pumpe 40 saugt über den Anschlußpunkt 30 und die Rohrstrecke 48, durchlaufend einen Schmutzfänger 31 und ein Rückschlagventil 32, Wasser aus einem Wassersystem, fördert es über die Rohrstrecke 49 in das Vakuumgefäß 34 und weiter über die Rohrstrecke 50 und den Anschlußpunkt 38 zurück in das Wassersystem. Die automatischen Ventile 60, 61, 62, 65, 66 werden dafür geöffnet, 63, 64, 67 bleiben geschlossen. Während des Umpumpvorgangs wird durch die Strahlpumpe 42 über die Rohrstrecke 53 das MAG 112 vollständig leergesaugt, sofern es während des vorherigen Arbeitsschritts (siehe weiter unten) nicht vollständig geleert wurde. Der Druck auf dem Manometer 102 fällt auf den in dem MAG eingestellten Vordruck. So kann kontrolliert werden, ob der Vordruck des MAG 112 noch stimmt.
Die Umpumpzeit wird durch Einstellung des Timers 68 im Steuerschrank 76 bestimmt. Die Umpumpmenge wird durch den Kontaktwasserzähler 33 gezählt. Er sendet 1l- Impulse, die im Steuerschrank 76 über die Leuchte 72 angezeigt werden. So kann über die Zeitvorgabe am Timer 68 die Umpumpmenge (Austauschmenge) bestimmt werden.

Timerzeit2 = Timer 69: Vakuum saugen
Nach Ende der Zeit 68 ändern sich die Schaltstellungen der automatischen Ventile:
Ventile 60, 63, 64, geöffnet.
Ventile 61, 62, 65, 66, 67 geschlossen.
Ventil 67 kann öffnen. Erläuterung dazu weiter unten.

Es entsteht eine schnelle interne Zirkulation in der Rohrstrecke 51 mit der Richtung Pumpe 40 > aut. Ventil 63 Strahlpumpe 41 > aut. Ventil 64, so daß an der Saugseite der Strahlpumpe und der Rohrstrecke 58 ein starker Unterdruck entsteht und Wasser aus dem Vakuumgefäß abgesaugt wird. Dadurch entsteht am Ausgang der Pumpe 40 ein hoher Druck durch welchen das abgesaugte Wasser durch die Strecke 49, die Strahlpumpe 42 (jetzt ohne Wirkung) und die Strecke 53 in das MAG 112 gepreßt wird. Die Anzeige am Manometer 102 steigt.

Über die Rohrstrecke 52 wird gewährleistet, daß hinter dem aut. Ventil 65 ein sehr niedriger Druck herrscht, so daß das Ventil immer optimal schließt und bei anstehendem Vakuum
über die Rohrstrecke 48 kein Wasser in die Anlage einfließen kann. Bei anstehendem Vakuum wird die Auspuffstrecke 55 über das Rückschlagventil 44, die Kondensatstecke 56 über das automatische Ventil 67 und die Austrittsstecke über das Rückschlagventil 35 verschlossen.

Die Anzeige auf dem Manometer 107 fällt auf Unterdruck. Analog steigt die Anzeige auf dem Manometer 102. Eine obere Druckbegrenzung wird auf dem Druckregler 97 eingestellt, so daß bei Erreichen eines unerwünschten hohen Drucks die
Anlage sich selbsttätig abschaltet und die Störungslampe 75 aufleuchtet.
Der Vorgang des Vakuumsaugens kann über das Schaurohr 36 beobachtet werden, wenn die Handventile 81 und 82 geöffnet sind.
Ist das Kondensatsammelgefäß 46 bei Beginn des Vakuumsaugens gefüllt, d.h. der Magnet-Schwimmer 100 des Sondenstabs 101 steht am oberen Reedschalter 98, öffnet das aut. Ventil 67 und das Kondensat wird in die Anlage zurückgesaugt, bis der Magnet-Schwimmer den unteren Reedschalter 99 erreicht hat . Während der Zeiten 68 (Umpumpen) und 71 (Druckausgleich) kann das Ventil 67 nicht öffnen. Eine nach Ende der Zeit 70 (Vakuum halten) verbleibende Restmenge an Kondensat muß ggf. zwecks Rücksaugung auf den nächsten Zyklus warten.

Timerzeit3 = Timer 70: Vakuum halten
Nach Ende der Zeit 69 wird das aut. Ventil 60 geschlossen.
Die Ventilstellungen sind dann:
Ventile 63, 64, offen.
Ventile 60, 61, 62, 65, 66, 67 geschlossen.
Ventil 67 kann öffnen, wenn das Kondensatgefäß 46 voll ist (siehe oben).

Die interne Zirkulation in der Rohrstrecke 51 bleibt bestehen, es wir aber aus dem Vakuumgefäß 34 kein Wasser mehr abgesaugt, so daß eine Beruhigungszeit eintritt, in der alle Gas- und Dampfblasen in den oberen Bereich des Vakuumgefäßes 34 und in die Luftsammelkammer 43 aufsteigen können. Das Aufsteigen kann an dem Schaurohr beobachtet werden und auf die Weise ist bestimmbar, wie lang die Zeit 70 eingestellt werden muß. Während dieser Zeit fällt der interne Druck in Abhängigkeit von der Wassertemperatur und kann auf dem Manometer 107 abgelesen werden.

Timerzeit4 = Timer 71: Interner Druckausgleich
Nach Ende der Zeit 70 wird das aut. Ventil 61 geöffnet. Die Ventilstellungen sind dann:
Ventile 61, 63, 64, offen.
Ventile 60, 62, 65, 66, 67 geschlossen.

Die interne Zirkulation in der Rohrstrecke 51 bleibt bestehen. Gleichzeitig fließt das im MAG 112 gespeicherte Wasser über die Rohrstrecken 53 und 59 in das Vakuumgefäß 34, so daß innerhalb der geschlossenen Anlage die Drücke sich so weit wie möglich ausgegleichen können.

Der Zyklus startet von neuem
Timerzeit1= Timer 68: Umpumpen, Wasserinhalt austauschen. Die in dieser Zeit ablaufenden Funktionen wurden oben bereits beschrieben. Nachdem die Anlage die Zeiten 69=Vakuum saugen, 70=Vakuum halten, 71=interner Druckausgleich durchlaufen hat und die Umpumpzeit 68 neu startet, wird durch die geänderte Ventilstellung (siehe oben) das Vakuum spontan zerstört, so daß entstandener Wasserdampf ebenso spontan kondensiert, was zu Folge hat, daß bei geöffnetem Ventil 66 in der Nachsatzstrecke 54 das durch die Entgasung entstandene Volumensdefizit durch Nachsatzwasser ersetzt wird, bis der Systemdruck den auf dem Druckmindererventil eingestellten Druck erreicht hat. Gleichzeitig entweicht (letztendlich unter Systemdruck) das ausgetriebene Gas und ein Rest von nicht kondensiertem Wasserdampf über die Auspuffstrecke 55 in das Kondensatsammelgefäß 46. Dort ist die Leitung 55 so tief eingeführt, daß ihr Ende unterhalb des Restwasserniveaus steht, was bewirkt, daß austretender Wasserdampf dort besser kondensieren kann.

Andere apparative Ausführungsformen des Verfahrens sind möglich. So kann die Flüssigkeitsentnahme zum Zwecke der Evakuierung direkt mittels einer saugenden Pumpe erfolgen, oder mit Hilfe eines in einem Zylinder sich abwärts bewegenden Kolbens. Das Verfahrensprinzip ist dasselbe, weshalb auf eine grafische Darstellung desselben hier verzichtet werden kann.

### Erzielbare Vorteile

Mit der erfindungsgemäßen Apparatur können Entgasungsleistungen erreicht werden, die an die Wirkung eines thermischen Entgasers heranreichen. Wenn es um das Austreiben von Sauerstoff zwecks Korrosionsverhütung geht, kann die verbleibende Restmenge an Sauerstoff gewöhnlich toleriert werden. In besonderen Fällen kann entweder ein sauerstoffbindendes Chemieprodukt zur restlichen Korrosionsvermeidung zugegeben werden, oder ein solches Korrosionsschutzmittel, das die Gegenwart von Sauerstoff toleriert. Da chemische Sauerstoffbinder wie z.B. Natriumsulfit NaSO₃, so wie sie üblicherweise zur Korrosionsverhütung eingesetzt werden auch gleichzeitig das System mit zusätzlichen Salzen belasten, kommt es nicht zu der gefährlichen Übersalzung von Kreisläufen mit z.B. Natriumsulfat NaSO₄. Das gleiche trifft auf Schnelldampferzeuger zu, in denen erhebliche Mengen an Natriumsulfit zur Sauerstoffbindung verwendet werden.
Durch den Austrieb von Sauerstoff können in solchen Wässern ganz erhebliche Mengen an Wasserchemikalien eingespart werden, was das Abwasser entlastet.

### Anwendungen

Inbetriebnahme und Sanierung von Heizungsanlagen, Kühlwasser und Klimakreisläufen. Entgasung von Speisewasser in Dampferzeugern, insbesondere Schnelldampferzeugern, zur Stillstandskonservierung von Dampfkesseln. Entgasung von Feuerschutz-Rohrsystemen (Sprinkleranlagen) und andere Anwendungen.

| Liste der Bezugszahlen in Fig. 2 | | | |
|---|---|---|---|
| 30 | Eintritt | 73 | Leuchte Pumpe |
| 31 | Schmutzfänger | 74 | Leuchte Nachsatz |
| 32 | Rückschlagventil Strecke 48 | 75 | Leuchte Überdruck |
| 33 | Kontaktwasserzähler | 76 | Steuerschrank |
| 34 | Vakuumgefäß | 77 77 | |
| 35 | Rückschlagventil Strecke 50 | 78 78 | |
| 36 | Schaurohr | 79 | HV System Eingang |
| 37 37 | | 80 | HV System Ausgang |
| 38 | Austritt | 81 | HV Schaurohr oben |
| 39 39 | | 82 | HV Schaurohr unten |
| 40 | Pumpe | 83 | HV Anlage entleeren |
| 41 | Vakuumpumpe1 | 84 | HV MAG1 Zulauf + Ablauf |
| 42 | Vakuumpumpe2 | 85 | HV MAG1 Entleerung |
| 43 | Luftsammelkammer | 86 | HV Nachsatz Frischwasser |
| 44 | Rückschlagventil Strecke 55 Auspuff | 87 | HV MAG2 Entleerung |
| 45 | Auspuffentil über Schwimmer betätigt | 88 | HV Kondensatgefäß man. füllen |
| 46 | Kondensatsammelgefäß | 89 89 | |
| 47 | Rückschlagventil Strecke 58 Kondensat rücksaugen | 90 | Druckminderer |
| 48 | Rohrstrecke Systemwasser ansaugen | 91 | Rückschlagventil |
| 49 | Rohrstrecke1 Wasser in die Anlage drücken | 92 92 | |
| 50 | Rohrstrecke Wasser Austritt | 93 93 | |
| 51 | Rohrstrecke Interne Zirkulation | 94 | Schalter, Haupt- |
| 52 | Rohrstrecke Vakuumunterstützung | 95 | Schalter Pumpe ein/aus |
| 53 | Rohrstrecke MAG1 beladen-entleeren | 96 | Schalter Nachsatzw. aut./man. |
| 54 | Rohrstrecke Nachsatz Frischwasser | 97 | Schalter, Aus-, Überdruck |
| 55 | Rohrstrecke Entlüften | 98 | Reedschalter Gefäß voll |
| 56 | Rohrstrecke Rücksaugen Kondensat | 99 | Reedschalter Gefäß leer |
| 57 | Rohrstrecke man. Füllen Kond.-gefäß | 100 | Schwimmer mit Magnet |
| 58 | Rohrstrecke Vakuum saugen | 101 | Sondenstab mit 2 Reedschaltern |
| 59 | Rohrstrecke2 Wasser in die Anlage drücken | 102 | Manometer MAG1 Ist-Druck |
| 60 | MV Pumpe druckseiffg | 103 | Manometer MAG2 Ist-Druck |
| 61 | MV Vakuumgefäß Eingang | 104 | Manometer Entgasereingang |
| 62 | MV Vak-Gefäß + Sysstemausgang | 105 | Manometer Entgaserausgang |
| 63 | MV Strahlpumpe Eingang | 106 | Manometer Frischw. nach Druckmind. |
| 64 | MV Strahlpumpe Ausgang | 107 | Manometer Vakuumgefäß +- Druck |
| 65 | MV System+Pumpe Eingang | 108 108 | |
| 66 | MV Frischwasser Nachsatz | 109 109 | |
| 67 | MV Kondensatrückführung | 110 110 | |
| 68 | Timer Umpumpen, Füllen | 111 111 | |
| 69 | Timer Vakuum saugen | | 112 MAG1 Wasseraufnahme + -Abgabe |
| 70 | Timer Vakuum halten | | 113 MAG2 Nachsatz nach Vakuum |
| 71 | Timer Druckausgleich | 114 114 | |
| 72 | Leuchte Zirkulation | 115 115 | |

## Patentansprüche

1. Verfahren zur Entgasung von Flüssigkeiten in geschlossenen Systemen durch Anwendung eines gegenüber dem Systemdruck geringeren Druckes, bei welchem die Flüssigkeit zur Erzeugung eines für die Entgasung von Flüssigkeiten notwendigen Unterdrucks in einen verschließbaren Behälter (6, 34) überführt wird, **dadurch gekennzeichnet, daß** danach zur Erzeugung eines bestimmbaren Unterdrucks eine ebenfalls bestimmbare Flüssigkeitsmenge aus dem Behälter (6, 34) in einen oder mehrere Membrandruckspeicher (21, 112) gepumpt wird, von wo aus die zwischengespeicherte Flüssigkeitsmenge nach Abschluß des Entgasungstaktes wieder mit der Flüssigkeit des Hauptsystems vermischt wird und ein Teil dieser vermischten Flüssigkeit wieder in den Behälter (6, 34) geführt wird, um ihn beim nächsten Arbeitstakt wiederum zu entgasen.

2. Verfahren nach Anspruch 1, **dadurch gekennzeichnet, daß** die dazugehörige Apparatur entweder parallel zu einem Kreislaufsystem geschaltet wird oder im Chargenbetrieb aus einem ersten Behälter mit gashaltiger Flüssigkeit eine bestimmte Menge entnimmt, sie entgast und in einen zweiten geschlossenen Behälter überführt.

3. Verfahren nach Anspruch 2, **dadurch gekennzeichnet, daß** in der Apparatur eine Pumpe (3, 40) und der Behälter (6, 34) hintereinander angeordnet sind, daß der Membrandruckspeicher (21, 112) an die Leitung (13) zwischen Pumpe und Behälter angeschlossen ist, daß während einer Umwälzzeit Pumpe und Behälter von der zu entgasenden Flüssigkeit durchströmt werden und daß während einer Evakuierzeit im Behälter (6, 34) ein Unterdruck erzeugt wird.

4. Verfahren nach Anspruch 3, **dadurch gekennzeichnet, daß** das Füllen und Entleeren des Membrandruckspeichers (21, 112) und/oder die Unterdruckerzeugung im Behälter (6, 34) mit Hilfe von Strahlpumpen (4, 42 bzw. 7, 41) durchgeführt wird.

5. Apparatur zur Durchführung eines Verfahrens zur Entgasung von Flüssigkeiten in geschlossenen Systemen durch Anwendung eines gegenüber dem Systemdruck geringeren Druckes, bei welchem die Flüssigkeit zur Erzeugung eines für die Entgasung von Flüssigkeiten notwendigen Unterdrucks in einen verschließbaren Behälter (6, 34) überführt und danach zur Erzeugung eines bestimmbaren Unterdrucks eine ebenfalls bestimmbare Flüssigkeitsmenge aus dem Behälter (6, 34) in einen oder mehrere Speicher (21, 112) gepumpt wird, von wo aus die zwischengespeicherte Flüssigkeitsmenge nach Abschluß des Entgasungstaktes wieder mit der Flüssigkeit des Hauptsystems vermischt wird und ein Teil dieser vermischten Flüssigkeit wieder in den Behälter (6, 34) geführt wird, um ihn beim nächsten Arbeitstakt wiederum zu entgasen, mit einem verschließbaren Behälter 6, 34), mit einem Speicher 21, 112) und einer Pumpe (3, 40), **dadurch gekennzeichnet, dass** der Speicher (21, 112) ein Membrandruckspeicher ist, dass die Pumpe (3, 40) und der Behälter (6, 34) hintereinander angeordnet sind und daß der Membrandruckspeicher (21, 112) an die Leitung (13) zwischen Pumpe und Behälter angeschlossen ist.

6. Apparatur nach Anspruch 5, **dadurch gekennzeichnet, daß** zum Füllen und Entleeren des Membrandruckspeichers (21, 112) und/oder zur Unterdruckerzeugung im Behälter (6, 34) Strahlpumpen (4, 42 bzw. 7, 41) vorgesehen sind.

7. Apparatur nach Anspruch 5 oder 6, **dadurch gekennzeichnet, daß** sie mit einer Vorrichtung für das Sammeln oder Rückführen von Kondensat ausgerüstet ist.

8. Apparatur nach Anspruch 5, 6 oder 7, dadurch gekennzeichent, daß sie mit einer Vorrichtung zum Nachsetzen des beim Entgasen entstandenen Volumenverlustes durch eine gleiche Menge Wasser ausgerüstet ist.

## Claims

1. A process for degassing liquids in closed systems by applying a pressure that is lower than the pressure of the system, wherein the liquid is transferred into a lockable container (6, 34) for the purpose of generating an underpressure that is necessary for the degassing of liquids, **characterised in that** after this with a view to generating a determinable underpressure a likewise determinable amount of liquid is pumped out of the container (6, 34) into one or more membrane pressure accumulators (21, 112), from where the temporarily stored amount of liquid is mixed again after conclusion of the degassing cycle with the liquid of the main system and some of this mixed liquid is conducted into the container (6, 34) again in order to degas it once again in the course of the next working cycle.

2. Process according to Claim 1, **characterised in that** the associated apparatus is either connected parallel to a circulation system or in batch operation withdraws a certain amount from a first container holding gassy liquid, degasses it and transfers it into a second closed container.

3. Process according to Claim 2, **characterised in that** a pump (3, 40) and the container (6, 34) are arranged in series in the apparatus, **in that** the membrane pressure accumulator (21, 112) is connected up to the line (13) between the pump and the container, **in that** during a recirculation period the pump and the container are perfused by the liquid to be degassed and **in that** an underpressure is generated in the container (6, 34) during an evacuation period.

4. Process according to Claim 3, **characterised in that** the filling and emptying of the membrane pressure accumulator (21, 112) and/or the generation of underpressure in the container (6, 34) are carried out with the aid of jet pumps (4, 42 and 7, 41).

5. An apparatus for implementing a process for degassing liquids in closed systems by applying a pressure that is lower than the pressure of the system, wherein the liquid is transferred into a lockable container (6, 34) for the purpose of generating an underpressure that is necessary for the degassing of liquids and after this with a view to generating a determinable underpressure a likewise determinable amount of liquid is pumped out of the container (6, 34) into one or more accumulators (21, 112), from where the temporarily stored amount of liquid is mixed again after conclusion of the degassing cycle with the liquid of the main system and some of this mixed liquid is conducted into the container (6, 34) again in order to degas it once again in the course of the next working cycle, with a lockable container (6, 34), with an accumulator (21, 112) and a pump (3, 40), **characterised in that** the accumulator (21, 112) is a membrane pressure accumulator, **in that** the pump (3, 40) and the container (6, 34) are arranged in series and **in that** the membrane pressure accumulator (21, 112) is connected up to the line (13) between the pump and the container.

6. Apparatus according to Claim 5, **characterised in that** jet pumps (4, 42 and 7, 41) are provided for the purpose of filling and emptying the membrane pressure accumulator (21, 112) and/or for the purpose of generating underpressure in the container (6, 34).

7. Apparatus according to Claim 5 or 6, **characterised in that** it is equipped with a device for collecting or recycling condensate.

8. Apparatus according to Claim 5, 6 or 7, **characterised in that** it is equipped with a device for replacing the loss of volume that has arisen in the course of degassing by means of an equal amount of water.

## Revendications

1. Procédé pour dégazer des liquides dans des systèmes fermés par utilisation d'une pression inférieure à la pression du système, selon lequel le liquide est transféré dans un réservoir (6, 34) pouvant être fermé pour produire une dépression requise pour le dégazage de liquides, **caractérisé en ce qu'**ensuite, pour produire une dépression déterminable, une quantité de liquide également déterminable est refoulée du réservoir (6, 34) dans un ou plusieurs accumulateurs hydrauliques à membrane (21, 112), d'où la quantité de liquide entreposée, à la fin du cycle de dégazage, est de nouveau mélangée au liquide du système principal, et une partie de ce liquide mélangé est renvoyée dans le réservoir (6, 34), pour la dégazer de nouveau lors du cycle de travail suivant.

2. Procédé suivant la revendication 1, **caractérisé en ce que** l'appareillage correspondant soit est monté en parallèle avec un système de circuit, soit soutire en discontinu d'un premier réservoir, contenant du liquide chargé en gaz, une quantité déterminée, la dégaze et la transfère dans un second réservoir fermé.

3. Procédé suivant la revendication 2, **caractérisé en ce qu'**une pompe (3, 40) et le réservoir (6, 34) sont disposés l'un derrière l'autre dans l'appareillage, que l'accumulateur hydraulique à membrane (21, 112) est raccordé à la conduite (13) entre la pompe et le réservoir, que la pompe et le réservoir sont balayés par le liquide à dégazer pendant un temps de circulation, et qu'une dépression est produite dans le réservoir (6, 34) pendant un temps d'obtention du vide.

4. Procédé suivant la revendication 3, **caractérisé en ce que** le remplissage et la vidange de l'accumulateur hydraulique à membrane (21, 112) et/ou la production de la dépression dans le réservoir (6, 34) sont réalisés à l'aide de pompes à jet (4, 42 ou 7, 41).

5. Appareillage pour la mise en oeuvre d'un procédé de dégazage de liquides dans des systèmes fermés par utilisation d'une pression inférieure à la pression du système, selon lequel le liquide est transféré dans un réservoir (6, 34) pouvant être fermé pour produire une dépression requise pour le dégazage de liquides, et ensuite, pour produire une dépression déterminable, une quantité de liquide également déterminable est refoulée du réservoir (6, 34) dans un ou plusieurs accumulateurs (21, 112), d'où la quantité de liquide entreposée, à la fin du cycle de dégazage, est de nouveau mélangée au liquide du système principal, et une partie de ce liquide mélangé est renvoyée dans le réservoir (6, 34), pour la dégazer de nouveau lors du cycle de travail suivant, comportant un réservoir (6, 34) pouvant être fermé, un accumulateur (21, 112) et une pompe (3, 40), **caractérisé en ce que** l'accumulateur (21, 112) est un accumulateur hydraulique à membrane, que la pompe (3, 40) et le réservoir (6, 34) sont disposés l'un derrière l'autre et que l'accumulateur hydraulique à membrane (21, 112) est raccordé à la conduite (13) entre la pompe et le réservoir.

6. Appareillage suivant la revendication 5, **caractérisé en ce que** des pompes à jet (4, 42 ou 7, 41) sont prévues pour le remplissage et la vidange de l'accumulateur hydraulique à membrane (21, 112) et/ou pour la production de la dépression dans le réservoir (6, 34).

7. Appareillage suivant l'une des revendications 5 et 6, **caractérisé en ce qu'**il est équipé d'un dispositif pour la collecte ou le recyclage de condensat.

8. Appareillage suivant l'une des revendications 5, 6 et 7, **caractérisé en ce qu'**il est équipé d'un dispositif pour compenser la perte de volume produite lors du dégazage par une quantité d'eau égale.
